# EUROPEAN PATENT APPLICATION

(11) **EP 4 621 557 A1**
(43) Date of publication of application: **24.09.2025**
(21) Application number: 23890639.0
(22) Date of filing: 03.11.2023
(51) Int. Cl.: G06F 8/61

(54) **METHOD FOR ACQUIRING CONFIGURATION FILE OF APPLICATION AND METHOD FOR INSTALLING APPLICATION**

(30) Priority: 17.11.2022 CN 202211459482
(71) Applicant: Nio Smart Technology Co., Ltd., Shanghai 201800 (CN)
(72) Inventor: LI, Bin, Shanghai 201804 (CN); QIU, Kangwen, Shanghai 201804 (CN)
(74) Representative: Vossius & Partner Patentanwälte Rechtsanwälte mbB
(86) International application number: PCT/CN2023/129724
(87) International publication number: WO 2024/104203

(57) **Abstract**

A method for installing an application program, an apparatus, a device, a server, and a medium are provided in the present invention. The present invention controls the application program to perform a plurality of operation trainings when the application program is installed on a terminal device for the first time, so as to obtain a hotspot object in each operation training, and store the hotspot object into a configuration file for compilation optimization of the application program. The present invention can ensure that the application program has the configuration file for compilation optimization, and the optimized hotspot object during the compilation optimization using the configuration file is also more comprehensive, which effectively improves the performance of the application program in terms of startup speed, fluency and so on, and effectively improves the user experience.

## Description

### CROSS-REFERENCE TO RELATED APPLICATIONS

The present application claims priority of CN patent application 202211459482.8 filed on November 17, 2022 with the title "Method for obtaining a configuration file of application program and method for installing application program", the entire of which is incorporated herein by reference.

### TECHNICAL FIELD

The present invention relates to the technical field of computers, and particularly provides a method for obtaining a configuration file of an application program, a method for installing an application program, an apparatus, a device, a server, and a medium.

### BACKGROUND

In the related art, a terminal device (such as a mobile phone) performs compilation optimization during installation of an application program (APP). During installation of an APP, the most widely used compiling modes mainly include a verify mode and a speed-profile mode. In the verify mode, only simple Dalvik Executable (DEX) code verification is performed on the APP without any code optimization. However, using the speed-profile mode, the APP can be deeply optimized according to a profile file provided. Comparing results of the two compiling modes, it can be found that the APP, after compiled by using the speed-profile mode, has a better performance optimization experience in terms of startup speed and fluency.

Therefore, in an Android system, the speed-profile compiling mode is adopted for APP installation by default. However, many APPs do not have their own profile files in a download process, which will cause the system to fail to detect the profile file during installation of the APP, so that the verify mode is only applied for compilation optimization, that is, only simple verification is performed, which will cause the APP to lose a certain performance experience.

Accordingly, there is a need for a new application program installation solution in the field to solve the above problems.

### SUMMARY

To overcome the above drawbacks, the present invention is proposed to solve, or at least partially solve the problem of: how to ensure that a speed-profile mode is effectively executed during the installation of an application program, to ensure that the application program is effectively optimized for compilation, improving its performance experience.

In a first aspect, the present invention provides a method for obtaining a configuration file of an application program. The method includes:
controlling, when the application program is installed on a terminal device for a first time, the installed application program to perform a plurality of operation trainings;
obtaining a hotspot object in each operation training, and writing the obtained hotspot object into the configuration file of the application program, where the configuration file is configured to accomplish compilation optimization of the application program;
ending the operation trainings when there is no newly added hotspot object in the operation trainings; and
obtaining the final configuration file of the application program according to the configuration file obtained through the operation trainings.

In a technical solution of the above method for obtaining the configuration file of the application program, obtaining the final configuration file of the application program according to the configuration file obtained through the operation trainings includes:
comparing the configuration file obtained through the operation trainings with a previous version of the configuration file;
setting, when a comparison difference is less than or equal to a preset difference threshold, the previous version of the configuration file as the final configuration file of the application program; and
setting, when the comparison difference is greater than the difference threshold, the configuration file obtained through the operation trainings as the final configuration file of the application program.

In a technical solution of the above method for obtaining the configuration file of the application program, the operation trainings include a startup operation training and/or a use operation training; and/or
the hotspot object is an object that is called in the operation trainings a number of times greater than or equal to a preset number of times threshold, and the object includes at least one of a class, a method, a function, or a field.

**In** a second aspect, the present invention provides a method for installing an application program. The method is applied to a terminal device, and includes:
sending a download request to a server for downloading the application program;
receiving an installation file of the application program and a configuration file of the application program returned by the server based on the download request; where the configuration file is obtained through the method for obtaining the configuration file of the application program according to any one of technical solutions of the above method for obtaining the configuration file of the application program;
performing installation operation of the application program using the installation file, and performing compilation optimization of the application program using the configuration file, to accomplish installation of the application program.

In a technical solution of the above method for installing the application program, the method further includes:
performing, when the configuration file of the application program does not exist in the server, the compilation optimization of the application program using code verification.

In a third aspect, the present invention provides a method for installing an application program. The method is applied to a server, and includes:
receiving a download request for the application program sent by a terminal device;
obtaining an installation file of the application program and a configuration file of the application program according to the download request; where the configuration file is obtained through the method for obtaining the configuration file of the application program according to any one of technical solutions of the above method for obtaining the configuration file of the application program;
sending the installation file and the configuration file to the terminal device, such that the terminal device performs installation operation of the application program using the installation file, and performs compilation optimization of the application program using the configuration file, to accomplish installation of the application program.

In a fourth aspect, provided is a control device, including a processor and a storage device. The storage device is configured to store a plurality of program codes, and the program codes are configured to be loaded and executed by the processor to perform the method for obtaining the configuration file of the application program according to any one of technical solutions of the above method for obtaining the configuration file of the application program.

In a fifth aspect, provided is a terminal device, including a processor and a storage device. The storage device is configured to store a plurality of program codes, and the program codes are configured to be loaded and executed by the processor to perform the method for obtaining the configuration file of the application program according to any one of technical solutions of the above method for obtaining the configuration file of the application program.

In a sixth aspect, provided is a server, including a processor and a storage device. The storage device is configured to store a plurality of program codes, and the program codes are configured to be loaded and executed by the processor to perform the method for obtaining the configuration file of the application program according to any one of technical solutions of the above method for obtaining the configuration file of the application program.

In a seventh aspect, provided is a non-transitory computer-readable storage medium storing a plurality of program codes. The program codes are configured to be loaded and executed by a processor to perform the method for obtaining the configuration file of the application program according to any one of technical solutions of the above method for obtaining the configuration file of the application program, or the method for installing the application program according to any one of technical solutions of the above method for installing the application program.

The one or more technical solutions of the present invention have at least one or more beneficial effects as follows:
in the technical solution where the present invention is implemented, the present invention can control the application program to perform the plurality of operation trainings when the application program is installed on the terminal device for the first time, so as to obtain a hotspot object in each operation training, and store the hotspot object into a configuration file for compilation optimization of the application program, and obtain the final configuration file of the application program according to the configuration file obtained through the operation trainings. By using the above configuration mode, the present invention can ensure that the application program has the configuration file for compilation optimization, to effectively ensure that the configuration file is applied for compilation optimization of the application program. Meanwhile, since the configuration file is obtained through the plurality of operation trainings, the hotspot object of the application program can be more fully contained in the configuration file. Therefore, after the application program is installed on the terminal device, the optimized hotspot object of the application program during the compilation optimization where the configuration file is applied can be also more comprehensive, which effectively improves the performance of the application program in terms of startup speed, fluency and so on, and effectively improves the user experience. Meanwhile, since the final configuration file of the application program is obtained through the operation trainings, the process of obtaining the configuration file through artificial coding is also avoided, so that the workload of a developer is reduced, and the accuracy probability of the hotspot object in the configuration file is improved.

### BRIEF DESCRIPTION OF DRAWINGS

The contents of the present invention will become more readily understood with reference to the accompanying drawings. Those skilled in the art will readily understand that these drawings are for illustrative purposes merely and are not intended to limit the protection scope of the present invention, in which:
FIG. 1 is a schematic flow chart of main steps of a method for obtaining a configuration file of an application program according to an embodiment of the present invention;
FIG. 2 is a schematic flow chart of main steps of a method for obtaining a configuration file of an application program according to an implementation of an embodiment of the present invention;
FIG. 3 is a schematic flow chart of main steps of a method for installing an application program according to an embodiment of the present invention;
FIG. 4 is a schematic flow chart of main steps of a method for installing an application program according to an implementation of an embodiment of the present invention; and
FIG. 5 is a schematic flow chart of main steps of a method for installing an application program according to another embodiment of the present invention.

### DETAILED DESCRIPTION

Some implementations of the present invention are described below with reference to the accompanying drawings. Those skilled in the art should understand that these implementations are merely used to explain the technical principles of the present invention and are not intended to limit the protection scope of the present invention.

In the description of the present invention, "module", "processor" may include hardware, software, or a combination of both. A module may include hardware circuitry, various suitable sensors, communication ports, memory, or may also include software components such as program codes, or may also be a combination of software and hardware. A processor may be a central processing unit, a microprocessor, a digital signal processor, or any other suitable processor. The processor has data and/or signal processing functions. The processor may be implemented in software, hardware, or a combination of both. A non-transitory computer-readable storage medium includes any suitable medium that can store program codes, such as a magnetic diskette, a hard disk, an optical disk, a flash memory, a read-only memory, a random-access memory, and the like. The term "A and/or B" means all possible combinations of A and B, such as A only, B only, or A and B. The term "at least one A or B" or "at least one of A and B" has a meaning similar to that of the term "A and/or B" and may include only A, only B, or both A and B. The singular forms of the terms "a", "an" and "the" may also include the plural forms.

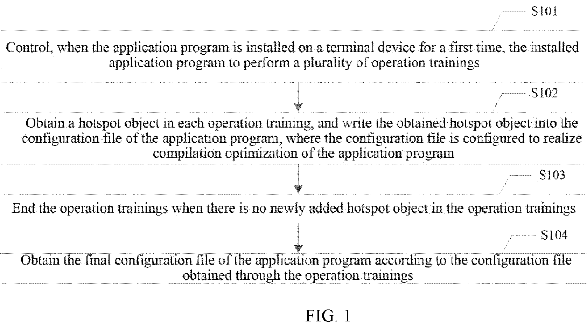

Referring to FIG. 1, FIG. 1 is a schematic flow chart of main steps of a method for obtaining a configuration file of an application program according to one example of the present invention. As shown in FIG. 1, the method for obtaining the configuration file of the application program in the embodiment of the present invention mainly includes the following Steps S101 to S104.

Step S101: when the application program is installed on a terminal device for a first time, the installed application program is controlled to perform a plurality of operation trainings.

In the embodiment, the installed application program may be controlled to perform a plurality of operation trainings when the application program is installed for the first time. The application program (App) may be different Apps or different versions of the same App; the terminal device may be a device capable of being installed with an operating system, such as a smart phone, a smart watch and the like installed with an Android system.

In an implementation, the operation trainings may be performed when the application program is installed on the user's terminal device for the first time, or the operation trainings of the application program may be implemented by using a special terminal device for operation training.

In an implementation, the operation trainings may include a startup operation training and a use operation training. The startup operation training may be repetitive cold starts, and the use operation training may be interface sliding of the application program, content selection and the like.

In an implementation, a script may be used to perform operations of repetitive cold starts, App interface sliding, and content selection, to accomplish operation training of the application program.

Step S102: a hotspot object in each operation training is obtained, and the obtained hotspot object is written into a configuration file of the application program, where the configuration file, i.e., a profile file, is configured to accomplish compilation optimization of the application program. Recorded in the profile file is a hotspot object during startup and use of the App, that is, an object which is frequently called. In a speed-profile mode, an Android system will record objects which are frequently called by the application program, and directly compile these objects into machine codes, and then the application program can be executed more efficiently upon next startup and use, so that the purpose of performance optimization is achieved. This process is compilation optimization of the application program.

In the embodiment, the hotspot object in each operation training is obtained, and the obtained hotspot object is written into the configuration file of the application program, where the configuration file is configured to accomplish compilation optimization of the application program. The hotspot object refers to an object which is called more frequently during startup and use of the application program. During startup and use of the application program, the system will start a thread to monitor a calling frequency of the object in the application program. When the calling frequency of the object reaches a certain value, the system will consider the object as a hotspot object and write it into the configuration file.

In an implementation, whether the object is a hotspot object may be determined by the number of times the object is called, and when the number of times the object is called in the operation trainings is greater than or equal to a preset number of times threshold, the object may be considered as the hotspot object. Those skilled in the art may set a value for the number of times threshold according to the needs of actual applications. The object may be one or more of a class, a method, a function, and a field.

Step S103: the operation trainings are ended when there is no newly added hotspot object in the operation trainings.

In the embodiment, when no newly added hotspot object appears, it can be considered that the collection of the hotspot object of the application program is completed, so that the operation training can be ended.

Step S104: the final configuration file of the application program is obtained according to the configuration file obtained through the operation trainings.

In the embodiment, the final configuration file of the application program may be determined according to the configuration file obtained through the operation trainings.

In an implementation, the configuration file obtained through the operation trainings may be directly taken as the final configuration file of the application program.

In an implementation, the configuration file obtained through the operation trainings may be compared with a previous version of the configuration file of the application program. If the comparison difference is greater than a difference threshold, the configuration file obtained through the operation trainings may be taken as the final configuration file of the application program; if the comparison difference is less than or equal to the difference threshold, the original configuration file is kept unchanged.

In an implementation, the difference threshold is 10%.

In an implementation, the final configuration file of the application program may be saved onto a server (e.g., an App cloud mall) which serves to provide an installation file of the application program, so that the terminal device obtains the configuration file while obtaining the installation file of the application program, thereby realizing compilation optimization of the installed application program.

Based on the above Steps S101 to S104, the embodiments of the present invention can control the application program to perform a plurality of operation trainings when the application program is installed on a terminal device for the first time, so as to obtain a hotspot object in each operation training, and store the hotspot object into a configuration file for compilation optimization of the application program, and obtain the final configuration file of the application program according to the configuration file obtained through the operation trainings. By using the above configuration mode, the embodiments of the present invention can ensure that the application program has the configuration file for compilation optimization, so as to effectively ensure that the configuration file is applied for compilation optimization of the application program. Meanwhile, since the configuration file is obtained through the plurality of operation trainings, the hotspot object of the application program can be more fully contained in the configuration file. Therefore, after the application program is installed on the terminal device, the optimized hotspot object of the application program during the compilation optimization where the configuration file is applied can be also more comprehensive, which effectively improves the performance of the application program in terms of startup speed, fluency and so on, and effectively improves the user experience. Meanwhile, since the final configuration file of the application program is obtained through the operation trainings, the process of obtaining the configuration file through artificial coding is also avoided, so that the workload of a developer is reduced, and the accuracy probability of the hotspot object in the configuration file is improved.

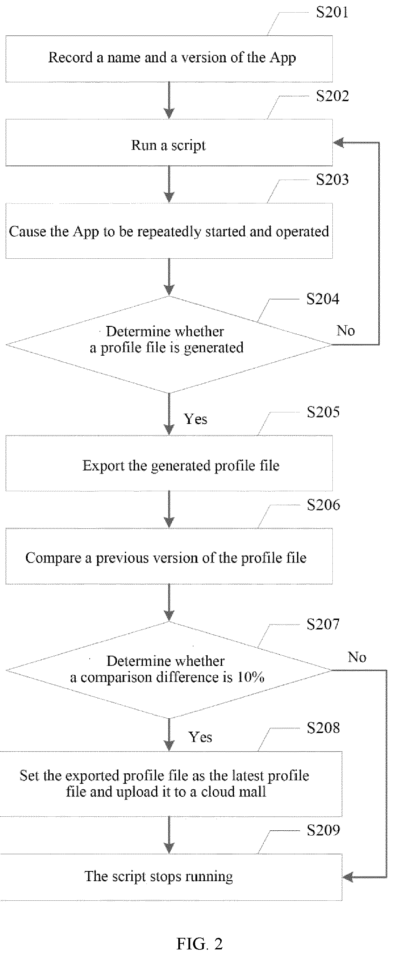

In an implementation, reference may be made to FIG. 2. FIG. 2 is a schematic flow chart of main steps of a method for obtaining a configuration file of an application program according to an implementation of an embodiment of the present invention. As shown in FIG. 2, the method for obtaining the configuration file of the application program may include the following Steps S201 to S209.

Step S201: a name and a version of the App are recorded.

In the implementation, the name and the version of the App are recorded before the configuration file is obtained.

Step S202: a script runs.

In the implementation, a script specially used for repeated startup and operation of the App may be executed.

Step S203: the App is caused to be repeatedly started and operated.

In the implementation, the App may be caused, based on the script, to be repeatedly started and operated, to accomplish a plurality of operation trainings.

Step S204: it is determined whether a profile file is generated; if so, proceed to Step S205; if not, proceed to Step S202.

In the implementation, if the profile file is generated, Step S205 may be performed next; otherwise, return to the script running.

Step S205: the generated profile file is exported.

In the implementation, the generated profile file may be exported.

Step S206: the previous version of the profile file is compared.

In the implementation, the exported profile file may be compared with the previous version of the profile file.

Step S207: it is determined whether the comparison difference is 10%; if so, proceed to Step S208; if not, proceed to Step S209.

In the implementation, when the comparison difference between the exported profile file and the previous version of the profile file reaches 10%, Step S208 may be performed next; otherwise, Step S209 is performed.

Step S208: the exported profile file is set as the latest profile file and uploaded to a cloud mall.

In the implementation, the exported profile may be set as the latest profile file of the App and uploaded to the cloud mall.

Step S209: The script stops running.

In the implementation, the script may stop running after the latest profile file is obtained.

Further, the present invention also provides a method for installing an application program.

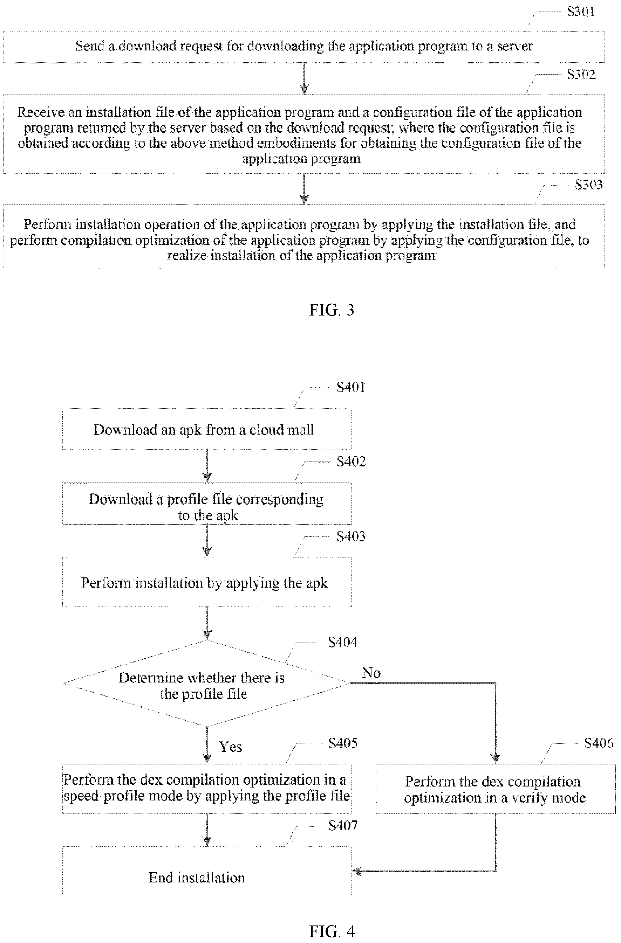

Referring to FIG. 3, FIG. 3 is a schematic flow chart of main steps of a method for installing an application program according to an embodiment of the present invention. As shown in FIG. 3, the method for installing the application program in the embodiment of the present invention is applied to a terminal device, and the method for installing the application program mainly includes the following Steps S301 to S303.

Step S301: a download request for downloading the application program is sent to a server.

In the embodiment, the download request for downloading the application program may be sent to the server when the terminal device needs to be installed with the application program.

In an implementation, the server may be a cloud mall which serves to download the application program.

Step S302: an installation file of the application program and a configuration file of the application program returned by the server based on the download request are received; where the configuration file is obtained according to the above method embodiment for obtaining the configuration file of the application program.

In the embodiment, the configuration file obtained based on the above method embodiment for obtaining the configuration file of the application program, and the installation file may be downloaded to the terminal device.

Step S303: installation operation of the application program is performed using the installation file, and compilation optimization of the application program is performed using the configuration file, to accomplish installation of the application program.

In the embodiment, the terminal device may perform the installation operation of the application program using the installation file, and perform the compilation optimization of the application program using the configuration file, to accomplish the installation of the application program.

In an implementation, when the configuration file of the application program does not exist in the server, the compilation optimization of the application program is performed using code verification.

In an implementation, referring to FIG. 4, FIG. 4 is a schematic flow chart of main steps of a method for installing an application program according to an implementation of the examples of the present invention. As shown in FIG. 4, the method for installing the application program may include the following Steps S401 to S407.

Step S401: an apk (Android application package) is downloaded from a cloud mall, where the apk is an installation file of the application program.

Step S402: a profile file corresponding to the apk is downloaded.

Step S403: installation is performed using the apk.

Step S404: it is determined whether there is the profile file; if so, proceed to Step S405; if not, proceed to Step S406.

Step S405: the dex compilation optimization in a speed-profile mode is performed using the profile file, where the dex is the type of an executable file on an Android platform.

Step S406: the dex compilation optimization in the verify mode is performed.

Step S407: The installation ends.

Further, the present invention also provides another method for installing an application program.

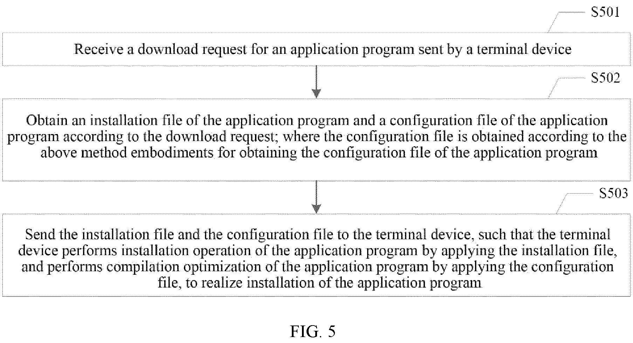

Referring to FIG. 5, FIG. 5 is a schematic flow chart of main steps of a method for installing an application program according to another embodiment of the present invention. As shown in FIG. 5, the method for installing the application program in the embodiment of the present invention is applied to a server, and the method for installing the application program mainly includes the following Steps S501 to S503.

Step S501: a download request for the application program sent by a terminal device is received.

Step S502: an installation file of the application program and a configuration file of the application program is obtained according to the download request; where the configuration file is obtained according to the above method embodiment for obtaining the configuration file of the application program.

Step S503: the installation file and the configuration file are sent to the terminal device, such that the terminal device performs installation operation of the application program using the installation file, and performs compilation optimization of the application program using the configuration file, to accomplish installation of the application program.

It is to be noted that although the steps are described in a specific order in the above embodiments, those skilled in the art will understand that the different steps are not necessarily performed in such order to achieve the effect of the present invention but may be performed simultaneously (in parallel) or in other orders, and such variations are all within the scope of the present invention.

It is understandable to those skilled in the art that all or part of the processes in the method of the above example implemented by the present invention may also be implemented by related hardware instructed by a computer program. The computer program may be stored in a computer-readable storage medium. The computer program, when executed by a processor, may implement the steps of the above method embodiments. Where the computer program includes computer program codes which may be in source code form, object code form, an executable file, or in some intermediate form, etc. The computer-readable storage medium may include any entity or device capable of carrying the computer program codes, a medium, a U disk, a mobile hard disk, a magnetic diskette, an optical disk, a computer memory, a read-only memory, a random-access memory, an electric carrier signal, a telecommunication signal and a software distribution medium. It is to be noted that the content contained in the computer-readable storage medium may be appropriately increased or decreased according to the requirements of legislation and patent practice in the jurisdiction. For example, in some jurisdictions, according to the legislation and patent practice, the computer-readable storage medium does not include electric carrier signals and telecommunication signals.

Further, the present invention also provides a control device. In an embodiment of the control device according to the present invention, the control device includes a processor and a storage device. The storage device may be configured to store a program which executes the method for obtaining the configuration file of the application program, of the above method embodiments. The processor may be configured to execute the program in the storage apparatus. The program includes, but is not limited to, a program which performs the method for obtaining the configuration file of the application program, of the above method embodiments. For the convenience of explanation, merely the part related to the embodiments of the present invention is shown, and reference may be made to the method part of the embodiments of the present invention for specific technical details not disclosed.

The control device may be a control apparatus device composed of various electronic devices. In some possible implementations, the control device may include a plurality of control devices and a plurality of processors. The program for performing the method for obtaining the configuration file of the application program, of the above method embodiments may be divided into a plurality of segments of sub-programs. Each segment of sub-program may be respectively loaded and executed by the processor to perform different steps of the method for obtaining the configuration file of the application program, of the above method embodiments. Particularly, each segment of sub-program may be respectively stored in different storage devices, and each processor may be configured to perform the programs in one or more storage devices to collectively implement the method for obtaining the configuration file of the application program, of the above method embodiments. That is, each processor performs different steps of the method for obtaining the configuration file of the application program, of the above method embodiments to collectively implement the method for obtaining the configuration file of the application program, of the above method embodiments.

The above plurality of processors may be processors deployed on the same device, for example, the above control device may be a high-performance device composed of a plurality of processors, and the above plurality of processors may be processors configured on the high-performance device. In addition, the above plurality of processors may also be processors deployed on different devices, for example, the above control device may be a server cluster, and the above plurality of processors may be processors on different servers in the server cluster.

Further, the present invention also provides a terminal device. In an embodiment of the terminal device according to the present invention, the terminal device includes a processor and a storage device. The storage device may be configured to store a program which performs the method for installing the application program, of the above method embodiments. The processor may be configured to execute the program in the storage device. The program includes, but is not limited to, a program which performs the method for installing the application program, of the above method embodiments. For the convenience of explanation, merely the part related to the embodiments of the present invention is shown, and reference may be made to the method part of the examples of the present invention for specific technical details not disclosed. The terminal device may be a control apparatus device composed of various electronic devices.

Further, the present invention also provides a server. **In** an embodiment of the server according to the present invention, the server includes a processor and a storage device. The storage device may be configured to store a program which performs the method for installing the application program, of the above method embodiments. The processor may be configured to execute the program in the storage device. The program includes, but is not limited to, a program which performs the method for installing the application program, of the above method embodiments. For the convenience of explanation, merely the part related to the embodiments of the present invention is shown, and reference may be made to the method part of the embodiments of the present invention for specific technical details not disclosed. The server may be a control apparatus device composed of various electronic devices.

Further, the present invention also provides a computer-readable storage medium. In an embodiment of the computer-readable storage medium according to the present invention, the computer-readable storage medium may be configured to store a program which performs the method for obtaining the configuration file of the application program, of the above method embodiments. The program may be loaded and executed by the processor to implement the above method for obtaining the configuration file of the application program. For the convenience of explanation, merely the part related to the embodiments of the present invention is shown, and reference may be made to the method part of the embodiments of the present invention for specific technical details not disclosed. The computer-readable storage medium may be a storage apparatus device composed of various electronic devices. Alternatively, the computer-readable storage medium in the embodiments of the present invention is a non-transitory computer-readable storage medium

Further, the present invention also provides another computer-readable storage medium. In an embodiment of the computer-readable storage medium according to the present invention, the computer-readable storage medium may be configured to store a program which performs the method for installing the application program, of the above method embodiments. The program may be loaded and executed by the processor to implement the above method for installing the application program. For the convenience of explanation, merely the part related to the embodiments of the present invention is shown, and reference may be made to the method part of the embodiments of the present invention for specific technical details not disclosed. The computer-readable storage medium may be a storage apparatus device composed of various electronic devices. Alternatively, the computer-readable storage medium in the embodiments of the present invention is a non-transitory computer-readable storage medium.

Further, it is to be understood that since the respective modules are merely set to illustrate functional units of the apparatus of the present invention, a physical device corresponding to these modules may be a processor itself, or a part of software, a part of hardware, or a part of a combination of software and hardware in the processor. Thus, the number of the respective modules in the drawings is merely illustrative.

It is understandable to those skilled in the art that the respective modules in the apparatus may be adaptively split or combined. Such splitting or combination of specific modules does not cause the technical solution to depart from the principle of the present invention. Therefore, technical solutions after the splitting or combination all will fall within the protection scope of the present invention.

So far, the technical solution of the present invention has been described in conjunction with the preferred embodiments shown in the accompanying drawings. However, those skilled in the art will readily understand that the protection scope of the present invention is obviously not limited to these specific embodiments. On the premise of not departing from the principle of the present invention, those skilled in the art may make equivalent modifications or substitutions to related technical features, and the technical solutions after these modifications or substitutions will fall within the protection scope of the present invention.

## Claims

1. A method for obtaining a configuration file of an application program, **characterized in that** the method comprises:
controlling, when the application program is installed on a terminal device for a first time, the installed application program to perform a plurality of operation trainings;
obtaining a hotspot object in each operation training, and writing the obtained hotspot object into the configuration file of the application program, wherein the configuration file is configured to accomplish compilation optimization of the application program;
ending the operation trainings when there is no newly added hotspot object in the operation trainings; and
obtaining the final configuration file of the application program according to the configuration file obtained through the operation trainings.

2. The method for obtaining the configuration file of the application program according to claim 1, **characterized in that** obtaining the final configuration file of the application program according to the configuration file obtained through the operation trainings comprises:
comparing the configuration file obtained through the operation trainings with a previous version of the configuration file;
setting, when a comparison difference is less than or equal to a preset difference threshold, the previous version of the configuration file as the final configuration file of the application program; and
setting, when the comparison difference is greater than the difference threshold, the configuration file obtained through the operation trainings as the final configuration file of the application program.

3. The method for obtaining the configuration file of the application program according to claim 1 or 2, **characterized in that** the operation trainings comprise a startup operation training and/or a use operation training; and/or
the hotspot object is an object that is called in the operation trainings a number of times greater than or equal to a preset number of times threshold, and the object comprises at least one of a class, a method, a function, or a field.

4. A method for installing an application program, **characterized in that** the method is applied to a terminal device, and the method comprises:
sending a download request to a server for downloading the application program;
receiving an installation file of the application program and a configuration file of the application program returned by the server based on the download request; wherein the configuration file is obtained through the method for obtaining the configuration file of the application program according to any one of claims 1 to 3; and
performing installation operation of the application program using the installation file, and performing compilation optimization of the application program using the configuration file, to accomplish installation of the application program.

5. The method for installing the application program according to claim 4, **characterized in that** the method further comprises:
performing, when the configuration file of the application program does not exist in the server, the compilation optimization of the application program using code verification.

6. A method for installing an application program, **characterized in that** the method is applied to a server, and the method comprises:
receiving a download request for the application program sent by a terminal device;
obtaining an installation file of the application program and a configuration file of the application program according to the download request; wherein the configuration file is obtained through the method for obtaining the configuration file of the application program according to any one of claims 1 to 3; and
sending the installation file and the configuration file to the terminal device, such that the terminal device performs installation operation of the application program using the installation file, and performs compilation optimization of the application program using the configuration file, to accomplish installation of the application program.

7. A control device, comprising a processor and a storage device, wherein the storage device is configured to store a plurality of program codes, **characterized in that** the program codes are configured to be loaded and exec by the processor to perform the method for obtaining the configuration file of the application program according to any one of claims 1 to 3.

8. A terminal device, comprising a processor and a storage device, wherein the storage device is configured to store a plurality of program codes, **characterized in that** the program codes are configured to be loaded and executed by the processor to perform the method for installing the application program according to any one of claims 4 to 5.

9. A server, comprising a processor and a storage device, wherein the storage device is configured to store a plurality of program codes, **characterized in that** the program codes are configured to be loaded and executed by the processor to perform the method for installing the application program according to claim 6.

10. A non-transitory computer-readable storage medium storing a plurality of program codes, **characterized in that** the program codes are configured to be loaded and executed by a processor to perform the method for obtaining the configuration file of the application program according to any one of claims 1 to 3, or the method for installing the application program according to any one of claims 4 to 5, or the method for installing the application program according to claim 6.
